## Europäisches Patentamt

## European Patent Office

## Office européen des brevets

(19)

(11) Numéro de publication: **0 236 155 B1**

(12) **FASCICULE DE BREVET EUROPEEN**

(45) Date de publication du fascicule du brevet:
**26.07.89**

(51) Int. Cl.⁴: **A 47 J 27/09**

(21) Numéro de dépôt: **87400091.2**

(22) Date de dépôt: **16.01.87**

(54) **Soupape de fonctionnement pour autocuiseur.**

(30) Priorité: **29.01.86 FR 8601244**

(43) Date de publication de la demande:
**09.09.87 Bulletin 87/37**

(45) Mention de la délivrance du brevet:
**26.07.89 Bulletin 89/30**

(84) Etats contractants désignés:
**AT BE CH DE ES GB GR IT LI LU NL SE**

(56) Documents cités:
**WO-A-80/02496**
**FR-A- 1 188 831**
**GB-A- 2 108 639**
**GB-A- 2 115 107**
**US-A- 2 428 483**
**US-A- 2 590 620**

(73) Titulaire: **SEB S.A., F-21260 Selongey (FR)**

(72) Inventeur: **Anota, Daniel, 16 Rue Quentin, F-21000 Dijon (FR)**

(74) Mandataire: **Bouju, André, Cabinet Bouju 38 avenue de la Grande Armée, F-75017 Paris (FR)**

ACTORUM AG

## Description

La présente invention concerne une soupape de fonctionnement pour autocuiseur.

On connaît de nombreux types de soupape de fonctionnement pour autocuiseur. Parmi celles-ci, on connaît notamment des soupapes rotatives comprenant un corps mobile en forme de coiffe, présentant un fond dont la face interne comporte un pointeau central qui repose librement sur l'ajutage de sortie de la vapeur de l'autocuiseur, lorsque la soupape est en position de fonctionnement.

Dans certaines réalisations, l'intérieur du corps mobile comporte une masse de lestage adaptée pour que le centre de gravité du corps mobile soit situé en dessous du pointeau.

Par ailleurs, le corps mobile comprend une ou plusieurs ouvertures latérales d'échappement de la vapeur.

Lorsque la pression de la vapeur de cuisson formée à l'intérieur de l'autocuiseur atteint la valeur désirée, le pointeau du corps mobile se soulève de l'extrémité de l'ajutage, ce qui permet à la vapeur de s'échapper à l'extérieur du corps mobile. La soupape maintient ainsi à l'intérieur de l'autocuiseur une pression sensiblement constante.

Dans les réalisations connues, répondant à la structure précitée, l'échappement de la vapeur provoque la rotation du corps mobile, ce qui engendre un bruit qui est désagréable pour de nombreux utilisateurs.

Le GB-A-2 108 639 concerne un détendeur de pression du type à poids, pour autocuiseur, dont la caractéristique principale réside dans le fait qu'il possède une chambre intermédiaire entre l'orifice de soupape et l'orifice d'évacuation pratiqué dans la jupe.

L'orifice d'évacuation est pratiqué à l'opposé du moyen de préhension. La mise en détente de pression et la mise en régulation de pression sont obtenues par rotation manuelle du détendeur.

L'évacuation de la vapeur par les orifices pratiqués dans la jupe ne crée aucun effet de couple tendant à faire pivoter axialement la soupape.

Le but de ce détendeur de pression est en fait un moyen de réduction du bruit d'échappement, obtenu en créant une chambre de première détente, ainsi que la mise en vidange par rotation et basculement de l'ensemble.

Lors de la rotation qui provoque la mise en vidange, le basculement est instantané, le débit de vapeur étant «tout ou rien».

Le but de la présente invention est de remédier à ce défaut de possibilité de réglage de la mise en vidange.

La soupape de fonctionnement visée par l'invention comprend un corps mobile en forme de coiffe présentant un fond dont la face interne comporte un pointeau central reposant librement sur l'ajutage de sortie de la vapeur de l'autocuiseur, lorsque la soupape est en position de fonctionnement, l'intérieur du corps mobile comportant une masse de lestage adaptée pour que le centre de gravité du corps mobile soit situé en-dessous du pointeau, ce corps mobile comportant une ouverture latérale d'échappement de la vapeur.

Suivant l'invention, cette soupape est caractérisée en ce que l'ouverture latérale du corps mobile est dissymétrique de façon que l'échappement de la vapeur crée un couple qui tend à faire pivoter ce corps mobile autour de son axe et en ce que ce corps mobile comporte une butée coopérant avec une butée fixe pour limiter le pivotement de ce corps sous l'effet du couple précité, des moyens étant prévus pour soulever le corps mobile par rotation de celui-ci pour le mettre en position de vidange de la vapeur et le couple créé par l'échappement de la vapeur par l'ouverture dissymétrique est opposé au sens de rotation du corps mobile pour mettre celui-ci en position de vidange de la vapeur.

Ainsi, lors du fonctionnement de la soupape, le couple engendré par l'échappement de la vapeur fait pivoter le corps mobile jusqu'à ce que la butée de celui-ci s'appuie contre la butée fixe. Le corps mobile étant ainsi immobilisé, aucun bruit désagréable n'est engendré lors du fonctionnement de la soupape.

Par ailleurs, la soupape ne risque pas de pivoter intempestivement vers la position de vidange de la vapeur.

D'autres particularités et avantages de l'invention apparaîtront encore dans la description ci-après.

Aux dessins annexés, donnés à titre d'exemples non limitatifs:

— la figure 1 est une vue en coupe longitudinale d'une soupape conforme à l'invention, en position sur l'ajutage de sortie de la vapeur d'un autocuiseur,

— la figure 2 est une vue en élévation avec arrachement, de la soupape, en position de fonctionnement,

— la figure 3 est une vue de dessus de la soupape, dans la position représentée sur la figure 2,

— la figure 4 est une vue en élévation de la soupape en position de début de vidange de la vapeur,

— la figure 5 est une vue de dessus de la soupape dans la position montrée à la figure 4,

— la figure 6 est une vue analogue à la figure 4, la soupape étant en position finale de vidange,

— la figure 7 est une vue de dessus de la soupape dans la position montrée à la figure 6.

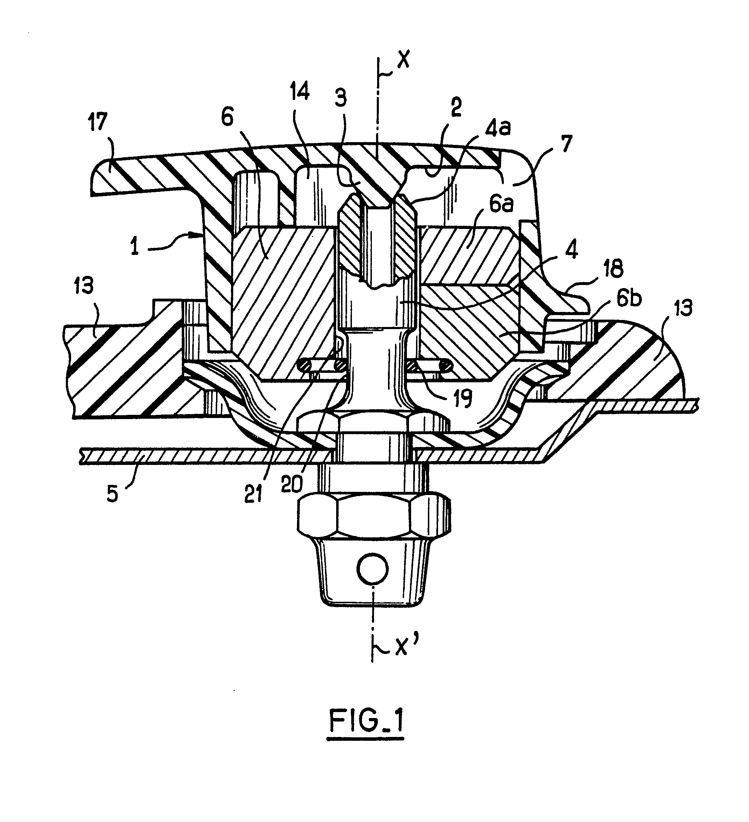

Dans la réalisation selon la figure 1, la soupape de fonctionnement pour autocuiseur comprend un corps mobile 1 en forme de coiffe, par exemple en matière plastique, présentant un fond 2 dont la face interne comporte un pointeau central 3 reposant librement sur l'ajutage 4 de sortie de la vapeur de l'autocuiseur. Cet ajutage 4 est fixé au couvercle 5 de l'autocuiseur.

L'intérieur du corps mobile 1 comporte une masse de lestage 6 adaptée pour que le centre de gravité du corps mobile 1 soit situé en-dessous du pointeau 3.

Par ailleurs, le corps mobile 1 présente une ouverture latérale 7 d'échappement de la vapeur.

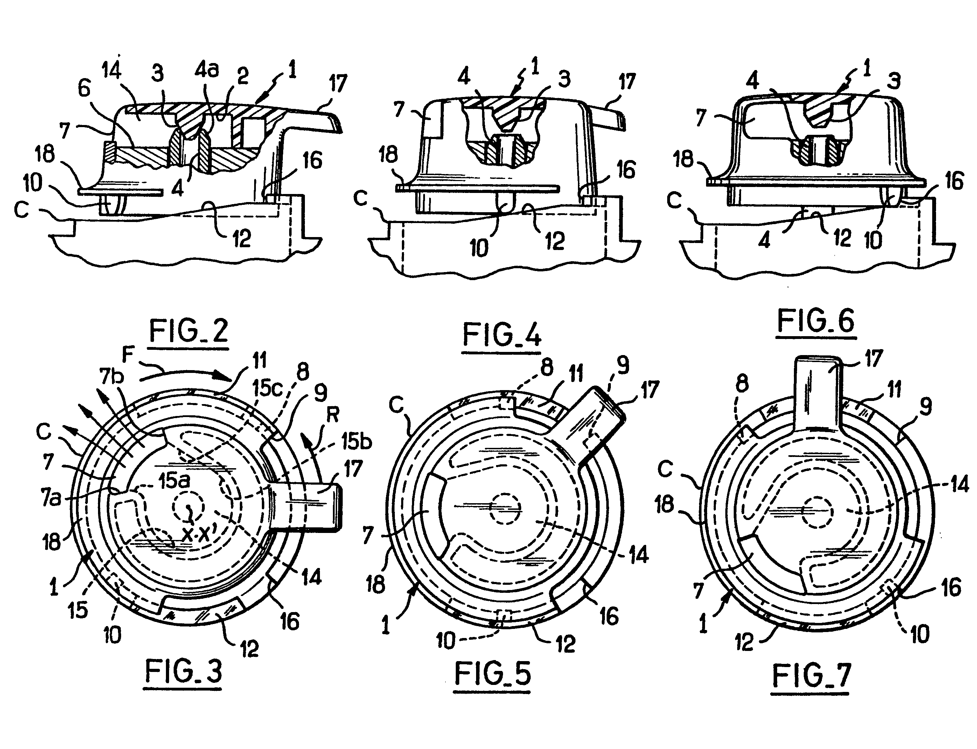

Conformément à l'invention, l'ouverture latérale 7 du corps mobile 1 est dissymétrique (voir figures 3, 5 et 7) de façon que l'échappement de la vapeur crée un couple (voir flèche F de la figure 3) qui tend à faire pivoter ce corps mobile 1 autour de son axe X-X$^1$.

Par ailleurs, le corps mobile 1 comporte une butée 8 coopérant avec une butée 9 fixe par rapport au couvercle 5 de l'autocuiseur (voir figure 3) pour empêcher le pivotement de ce corps 1 sous l'effet du couple F précité.

La soupape conforme à l'invention, comprend également des moyens pour soulever le corps mobile 1 par rotation de celui-ci pour le mettre en position de vidange de la vapeur.

Dans la réalisation représentée (voir figures 2 à 7), ces moyens comprennent deux doigts 8, 10, diamétralement opposés, fixés à la partie inférieure du corps 1, ces deux doigts 8, 10 pouvant s'engager par rotation du corps 1 suivant son axe X-X$^1$ sur deux rampes 11, 12 fixes par rapport au couvercle 5 de l'autocuiseur et s'étendant de façon diamétralement opposée sur un cercle C.

Ces deux doigts 8, 10 sont parallèles à l'axe X-X$^1$ et sont portés par un rebord 18 perpendiculaire à cet axe s'étendant sur un peu plus de 180° autour de ce dernier.

Dans la réalisation représentée, la butée fixe 9 et les rampes 11, 12 sont ménagées sur une poignée 13 solidaire du couvercle 5 de l'autocuiseur.

Le couple F créé par l'échappement de la vapeur par l'ouverture dissymétrique 7 est opposé au sens de rotation R (voir figure 3) du corps mobile 1 pour mettre celui-ci en position de vidange de la vapeur.

Comme on le voit sur les figures 1 et 2, l'ouverture latérale disymétrique 7 est ménagée en regard du pointeau 3 et de l'extrémité 4a de l'ajutage 4 qui reçoit ce pointeau.

On voit également sur les figures 1 et 2 que le corps mobile 1 comporte une cavité 14 ménagée entre le fond 2 du corps mobile et la masse de lestage 6 et entourant le pointeau 3 et l'extrémité supérieure 4a de l'ajutage. Cette cavité 14 s'ouvre vers l'extérieur par l'ouverture latérale 7 d'échappement de la vapeur.

Comme montré en pointillés sur les figures 3, 5 et 7, la cavité 14 est délimitée latéralement par une surface cylindrique 15 coaxiale au pointeau 3 et à l'ajutage 4.

L'une 15a des extrémités de cette surface cylindrique 15 est pratiquement directement raccordée à l'un 7a des bords latéraux de l'ouverture 7 d'échappement de la vapeur et l'autre extrémité 15b de cette surface cylindrique est raccordée à l'autre bord latéral 7b de l'ouverture 7 par une surface plane 15c sensiblement tangente à l'extrémité 15b de la surface cylindrique 15.

On voit par ailleurs sur les figures 2 à 7, qu'une seconde butée fixe 16 placée au-delà du sommet de la rampe 12 coopérant avec le doigt 10 ménagé sur le corps mobile 1, est prévu pour limiter la rotation du corps mobile 1 dans un sens R opposé à celui du couple F exercé par la vapeur s'échappant de l'ouverture 7. Cette seconde butée 16 définit la position finale de vidange de la vapeur (voir figures 6 et 7).

Le corps mobile 1 comporte en outre une languette de préhension 17 à l'opposé de l'ouverture 7 d'échappement de la vapeur.

Par ailleurs, on voit sur la figure 1, que la masse de lestage 6 est fixée de façon amovible à l'intérieur du corps 1 et comporte à sa partie inférieure un ressort 19 qui prend appui élastiquement dans une gorge annulaire 20 pratiquée dans l'ajutage 4 et qui permet de monter le corps 1 sur cet ajutage par encliquetage, la hauteur de cette gorge 20 étant suffisante pour permettre au corps 1 de se soulever lorsque les doigts 8, 10 montent sur les rampes 11, 12.

L'alésage central 21 de la masse de lestage 6 dans lequel est engagé l'ajutage 4 présente avec ce dernier un jeu minimal de façon que la vapeur s'échappe en totalité par l'ouverture 7.

La masse de lestage 6 peut être remplacée par une masse en deux parties 6a, 6b (voir partie droite de la figure 1), plus légère, permettant le fonctionnement de la soupape avec une pression inférieure.

Le fonctionnement de la soupape que l'on vient de décrire est le suivant:

Dans la position de fonctionnement représentée sur les figures 1 et 2, le pointeau 3 s'appuie sur l'ajutage 4 et les doigts 8, 10 du corps 1 sont disposés à l'extérieur des rampes 11, 12 et ne touchent pas la piste circulaire sur laquelle sont ménagées ces rampes.

Lorsque la vapeur atteint la pression de fonctionnement, le pointeau 3 se soulève de l'ajutage 4 et la vapeur s'échappe à l'extérieur par l'ouverture 7.

Du fait de la dissymétrie de cette ouverture 7 et de la forme de la cavité 14, en particulier de la surface plane 15c qui agit comme déflecteur par rapport à la trajectoire de la vapeur, l'échappement de la vapeur crée un couple F (voir figure 3) tel que le doigt 8 vient en butée contre la butée fixe 9. Ainsi, le corps 1 reste immobile et ne risque pas de pivoter intempestivement dans le sens R, c'est-à-dire vers la position de vidange de la vapeur.

En fin de cuisson, l'utilisateur tourne le corps 1 dans le sens R. Lors de cette rotation, les doigts 8, 10 montent sur les rampes 11, 12 (voir figure 4) et le pointeau 3 se soulève de l'ajutage 4, ce qui permet la vidange de la vapeur. Le frottement des doigts 8, 10 sur les rampes 11, 12 est tel que le corps 1 est stable en toutes positions des doigts 8, 10 sur les rampes 11, 12 malgré le couple F provoqué par l'échappement de la vapeur.

L'utilisateur peut ainsi augmenter progressivement le débit de vidange de la vapeur en faisant monter progressivement les doigts 8, 10 sur les rampes 11, 12.

Le débit maximal de vidange de la vapeur est atteint dans la position représentée sur les figures 6, 7. Dans cette position, le doigt 10 prend appui contre la butée fixe 16.

**Revendications**

1. Soupape de fonctionnement pour autocuiseur, comprenant un corps mobile (1) en forme de coiffe présentant un fond (2) dont la face interne comporte un pointeau central (3) reposant librement sur l'ajutage (4) de sortie de la vapeur de l'autocuiseur, lorsque la soupape est en position de fonctionnement, l'intérieur du corps mobile comportant une masse de lestage (6) adaptée pour que le centre de gravité du corps mobile soit situé en-dessous du pointeau, ce corps mobile (1) présentant une ouverture latérale (7) d'échappement de la vapeur, caractérisée en ce que l'ouverture latérale (7) du corps mobile (1) est dissymétrique de façon que l'échappement de la vapeur crée un couple (F) qui tend à faire pivoter ce corps mobile (1) autour de son axe (X-X¹) et en ce que ce corps comporte une butée (8) coopérant avec une butée fixe (9) pour limiter le pivotement de ce corps sous l'effet du couple précité, des moyens étant prévus pour soulever le corps mobile (1) par rotation de celui-ci pour le mettre en position de vidange de la vapeur et le couple (F) crée par l'échappement de la vapeur par l'ouverture dissymétrique (7) étant opposé au sens de rotation (R) du corps mobile (1) pour mettre celui-ci en position de vidange de la vapeur.

2. Soupape conforme à la revendication 1, caractérisé en ce que ces moyens comprennent au moins un doigt (10) ménagé sur le corps mobile (1) pouvant s'engager sur une rampe fixe (12) par rotation dudit corps mobile (1).

3. Soupape conforme à la revendication 2, caractérisé en ce que lesdits moyens comprennent deux doigts (8, 10) diamétralement opposés, coopérant avec deux rampes fixes (11, 12) également diamétralement opposées.

4. Soupape conforme à l'une des revendications 1 à 3, caractérisée en ce que la butée fixe (9) et la ou les rampes (11, 12) sont ménagées sur une poignée (13) solidaire du couvercle (5) de l'autocuiseur.

5. Soupape conforme à l'une des revendications 1 à 4, caractérisée en ce que l'ouverture latérale dissymétrique (7) est ménagée en regard du pointeau (3) et de l'extrémité (4a) de l'ajutage sur lequel repose ce pointeau.

6. Soupape conforme à l'une des revendications 1 à 5, caractérisée en ce que le corps mobile (1) comporte une cavité (14) ménagée entre le fond (2) du corps mobile et la masse de lestage (6) et entourant le pointeau (3) et l'extrémité supérieure (4a) de l'ajutage, cette cavité (14) s'ouvrant vers l'exterieur par ladite ouverture latérale (7) d'échappement de la vapeur et en ce que cette cavité (14) est délimitée latéralement par une surface cylindrique (15) coaxiale au pointeau (3) et à l'ajutage (4), l'une (15a) des extrémités de cette surface cylindrique (15) étant sensiblement directement raccordée à l'un (7a) des bords latéraux de l'ouverture (7) d'échappement de la vapeur et l'autre extrémité (15b) de cette surface cylindrique étant raccordée à l'autre bord latéral (7b) de l'ouverture précitée, par une surface plane (15c) sensiblement tangente à ladite extrémité (15b) de la surface cylindrique.

7. Soupape conforme à l'une des revendications 3 à 6, caractérisée en ce qu'une seconde butée fixe (16) coopérant avec l'un (10) des doigts ménagés sur le corps mobile (1) est prévue pour limiter la rotation de ce corps mobile dans un sens opposé à celui du couple (F) exercé par la vapeur s'échappant de l'ouverture, cette seconde butée (16) définissant la position finale de vidange de la vapeur.

8. Soupape conforme à l'une des revendications 1 à 7, caractérisée en ce que le corps mobile (1) comporte une languette de préhension (17), à l'opposé de l'ouverture (7) d'échappement de la vapeur.

**Patentansprüche**

1. Betriebsventil für einen Dampfdruckkochtopf mit einem beweglichen Körper (1) in Form einer Kappe mit einem Boden (2), dessen Innenfläche in der Mitte eine Düsennadel (3) aufweist, die frei auf der Dampfauslaßdüse (4) des Dampfdruckkochtopfs aufliegt, wenn sich das Ventil in der Betriebsstellung befindet, wobei das Innere des beweglichen Körpers eine Ballastmasse (6) enthält, die so angepaßt ist, daß der Schwerpunkt des beweglichen Körpers unterhalb der Düsennadel liegt, und wobei der bewegliche Körper (1) eine seitliche Dampfablaßöffnung (7) aufweist, dadurch gekennzeichnet, daß die seitliche Dampfablaßöffnung (7) des beweglichen Körpers (1) derart unsymmetrisch ist, daß das Entweichen des Dampfs ein Drehmoment (F) erzeugt, das versucht, den beweglichen Körper (1) um seine Achse (X-X¹) zu schwenken, und daß der Körper mit einem Anschlag (8) versehen ist, der mit einem festen Anschlag (9) zusammenwirkt, um ein Verschwenken des Körpers unter dem Einfluß des Drehmoments zu begrenzen, wobei Mittel zum Anheben des beweglichen Körpers (1) bei seiner Drehung zum Einstellen in die Dampfableitungsstellung vorgesehen sind und das durch Entweichen des Dampfs aus der unsymmetrischen Öffnung (7) erzeugte Drehmoment (F) der Drehrichtung (R) des beweglichen Körpers (1) entgegengesetzten ist, mit der dieser in die Dampfableitungsstellung verstellt wird.

2. Ventil nach Anspruch 1, dadurch gekennzeichnet, daß die genannten Mittel wenigstens einen Finger (10) enthalten, der an dem beweglichen Körper (1) angebracht ist und der durch Drehung des beweglichen Körpers (1) mit einer festen Rampe (12) in Eingriff kommen kann.

3. Ventil nach Anspruch 2, dadurch gekennzeichnet, daß die genannten Mittel zwei diametral gegenüberliegende Finger (8, 10) enthalten, die mit zwei ebenfalls diametral gegenüberliegenden festen Rampen (11, 12) zusammenwirken.

4. Ventil nach einem der Ansprüche 1 bis 3, dadurch gekennzeichnet, daß der feste Anschlag (9) und die eine oder die zwei Rampen (11, 12) an einem Griff (13) angebracht sind, der fest mit dem Deckel (5) des Dampfdruckkochtopfs verbunden ist.

5. Ventil nach einem der Ansprüche 1 bis 4, dadurch gekennzeichnet, daß die unsymmetrische seitliche Öffnung (7) gegenüber der Düsennadel (3) und dem Ende (4a) der Düse angeordnet ist, auf dem die Düsennadel aufliegt.

6. Ventil nach einem der Ansprüche 1 bis 5, dadurch gekennzeichnet, daß der bewegliche Körper (1) eine Ausnehmung (14) aufweist, die zwischen dem Boden (2) des beweglichen Körpers und der Ballastmasse (6) angebracht ist und die Düsennadel (3) sowie das obere Ende (4a) der Düse umgibt, wobei diese Ausnehmung (14) sich durch die seitliche Dampfablaßöffnung (7) nach außen hin öffnet, und daß die Ausnehmung (14) seitlich durch eine zylindrische Fläche (15) begrenzt ist, die koaxial zur Düsennadel (3) und zur Düse (4) verläuft, wobei das eine (15a) der Enden dieser zylindrischen Fläche (15) im wesentlichen direkt an einen (7a) der seitlichen Ränder der Dampfablaßöffnung (7) anschließt, während das andere Ende (15b) dieser zylindrischen Fläche an den anderen seitlichen Rand (7b) der genannten Öffnung über eine ebene Fläche (15c) anschließt, die im wesentlichen tangential zu dem Ende (15b) der zylindrischen Fläche verläuft.

7. Ventil nach einem der Ansprüche 3 bis 6, dadurch gekennzeichnet, daß ein mit einem (10) der am beweglichen Körper (1) angebrachten Finger zusammenwirkender zweiter fester Anschlag (16) vorgesehen ist, damit die Drehung des beweglichen Körpers in einer zur Richtung des durch den der Öffnung entströmenden Dampf hervorgerufenen Drehmoments (F) entgegengesetzten Richtung begrenzt wird, wobei dieser zweite Anschlag (16) die Dampfableitungs-Endstellung festlegt.

8. Ventil nach einem der Ansprüche 1 bis 7, dadurch gekennzeichnet, daß der bewegliche Körper (1) auf der der Dampfablaßöffnung (7) entgegengesetzten Seite eine Greifzunge (17) aufweist.

**Claims**

1. A pressure cooker operating valve comprising a movable member (1) in the form of a cap having an end (2) whose inner surface comprises a central needle (3) resting freely on the pressure cooker steam exhaust nozzle (4) when the valve is in the operating position, the inside of the movable member comprising a ballast weight (6) such that the centre of gravity of the movable member is situated beneath the needle, said movable member (1) having a lateral steam exhaust aperture (7), characterised in that the lateral aperture (7) in the movable member (1) is dissymetrical so that the escape of the steam produces a torque (F) which tends to pivot the movable member (1) about its axis $(X-X^1)$ and in that said movable member comprises a stop (8) co-operating with a fixed stop (9) to limit the pivoting of said movable member in response to the said torque means being provided to lift the movable member (1) by rotation thereof to bring it into the steam discharge position, and the torque (F) produced by the escape of the steam through the dissymetrical aperture (7) being in the opposite direction to the direction of rotation of rotation (R) of the movable member (1) to bring the latter into the steam discharge position.

2. A valve according to claim 1, characterised in that said means comprise at least one finger (10) formed on the movable member (1) and adapted to engage on a fixed ramp (12) by rotation of said movable member (1).

3. A valve according to claim 2, characterised in that the said means comprise two diametrically opposite fingers (8, 10) cooperating with two likewise diametrically opposite fixed clamps (11, 12).

4. A valve according to any one of claims 1 to 3, characterised in that the fixed stop (9) and the or each ramp (11, 12) are formed on a handle (13) integral with the pressure cooker lid (5).

5. A valve according to any one of claims 1 to 4, characterised in that the dissymetrical lateral aperture (7) is formed facing the needle (3) and the end (4a) of the nozzle on which said needle rests.

6. A valve according to any one of claims 1 to 5, characterised in that the member (1) comprises a cavity (14) formed between the end (2) of the movable member and the ballast weight (6) and surrounding the needle (3) and the top end (4a) of the nozzle, said cavity (14) opening to the exterior via the said lateral steam exhaust aperture (7) and in that said cavity (14) is laterally defined by a cylindrical surface (15) coaxial with the needle (3) and with the nozzle (4), one (15a) of the ends of said cylindrical surface (15) being substantially directly connected to one (7a) of the side edges of the steam exhaust aperture (7) and the other end (15b) of said cylindrical surface being connected to the other side edge (7b) of the said aperture via a plane surface (15c) substantially tangential to the said end (15b) of the cylindrical surface.

7. A valve according to any one of claims 3 to 6, characterised in that a second fixed stop (16) co-operating with one (10) of the fingers formed on the movable member (1) is adapted to limit rotation of said movable member in the opposite direction to that of the torque (F) exerted by the steam escaping from the aperture, said second stop (16) defining the final steam discharge position.

8. A valve according to any one of claims 1 to 7, characterised in that the movable member (1) comprises a gripper tongue (17) remote from the steam exhaust aperture (7).

FIG.1

EP 0 236 155 B1

FIG.6

FIG.7

FIG.4

FIG.5

FIG.2

FIG.3